(19) Europäisches Patentamt / European Patent Office / Office européen des brevets

(11) **EP 2 564 404 B1**

(12) **EUROPEAN PATENT SPECIFICATION**

(45) Date of publication and mention
of the grant of the patent:
**06.07.2022 Bulletin 2022/27**

(21) Application number: **11744056.0**

(22) Date of filing: **29.04.2011**

(51) International Patent Classification (IPC):
*H01G 11/26* (2013.01)    *H01G 11/32* (2013.01)
*H01G 11/38* (2013.01)    *H01G 11/42* (2013.01)

(52) Cooperative Patent Classification (CPC):
**H01G 11/26; H01G 11/32; H01G 11/38;**
**H01G 11/42;** Y02E 60/13

(86) International application number:
**PCT/IB2011/001142**

(87) International publication number:
**WO 2011/135451 (03.11.2011 Gazette 2011/44)**

(54) **METHOD FOR PREPARING A CARBON COMPOSITE ELECTRODE FOR ELECTRIC DOUBLE-LAYER CAPACITOR**

VERFAHREN ZUR BEREITSTELLUNG EINER VERBUNDKOHLENSTOFFELEKTRODE FÜR ELEKTRISCHEN DOPPELSCHICHTKONDENSATOR

PROCÉDÉ DE PRÉPARATION D'UNE ÉLECTRODE EN CARBONE COMPOSITE POUR CONDENSATEUR ÉLECTRIQUE À DOUBLE COUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2010 EE 201000042**

(43) Date of publication of application:
**06.03.2013 Bulletin 2013/10**

(73) Proprietor: **OÜ Skeleton Technologies Group**
**13516 Tallinn (EE)**

(72) Inventors:
• **LEIS, Jaan**
**EE-51014 Tartu (EE)**
• **ARULEPP, Mati**
**EE-51014 Tartu (EE)**
• **PERKSON, Anti**
**EE-61601 Nõo (EE)**

(74) Representative: **Sarap, Margus**
**Sarap and Putk Patent Agency**
**Kompanii 1C**
**51004 Tartu (EE)**

(56) References cited:
**EP-A1- 1 786 008**     **WO-A1-2005/118471**
**WO-A2-2008/058231**     **WO-A2-2009/143857**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

Present invention is related to a method for preparing a carbon composite electrode with high energy density for the electrical double layer capacitor.

BACKGROUND ART

The energy and power output properties of the electric double-layer capacitor or supercapacitor or supercondenser depend significantly on the structure and electrochemical qualities of the capacitor electrodes. The principal component that determines the electric capacity or energy density of capacitor electrodes is the carbon material used in the electrode and its qualities: porosity, conductivity, chemical inertness, density, compactability, etc.

Documents US6602742 and US6697249 describe carbide derived carbon material as one of the best supercapacitor materials. On the other hand, it is known that the nano- and microstructure of carbide-derived carbon material varies, ranging from amorphous irregular carbon skeleton to graphitic or diamond-like highly ordered structures [Yushin G, Nikitin A, Gogotsi Y. Carbide derived carbon. In: Gogotsi Y, editor. Nanomaterials Handbook, vol. 3. Boca Raton: CRC Press; 2006. p. 239-82]. The carbon material for the double-layer capacitor needs to be of great porosity and with appropriate pore dimensions, whereas appropriate pore dimensions are a subject of discussion to this day with various research results and expert statements providing contrasting opinions on the optimum pore size. Thus, in reality only a very restricted range of structural modifications of carbidic carbon is suitable as the electrode material for the supercapacitor and very probably only a limited choice has superior qualities for preparing supercapacitor electrodes. It is a fact that today there exist no firm criteria and models for selecting carbon materials of that kind.

Document EP1786008 discloses a raw-material carbon composition for use in a carbon material for an electrode of an electric double-layer capacitor by applying an activation process.

WO 2008/058231 A2 discloses a high surface area porous carbon material and a process for making it.

DISCLOSURE OF INVENTION

The present invention is defined by a method for preparing a carbon composite electrode according to independent claim 1, preferably a high energy density carbon/carbon Electric Double-layer Capacitor (EDLC) composite electrode, in which the EDLC consists of a negatively charged carbon composite electrode and positively charged carbon composite electrode, separated from each other by a separator having porosity all through, whereas the active layer of both electrodes is formed by a primary synthetic microporous carbon of irregular, non-graphitic structure, secondary synthetic microporous carbon, consisting of graphene layers and polymeric binding agent in a manner that the average pore size of primary synthetic microporous carbon in a positively charged electrode is less or equal to the average pore size of primary synthetic microporous carbon in a negatively charged electrode.

The specific capacity of the appropriate carbon composite electrode according to the invention ($C_V$ [F cm$^{-3}$]) is expressed as a dependency:

$$C_V = a * V_{p<11} + b * S_{BET} + c * D - d$$

where $V_{p<11}$ is the volume of pores sized less than 1.1 nm, calculated from the Barrett-Joyner-Halenda (BJH) pore size distribution, $S_{BET}$ is the carbon specific surface area calculated by the Brunauer-Emmet-Teller (BET) theory and D is the apparent (geometric) density of compacted carbon, a, b, c and d are coefficients and intercept of the multiple linear regression equation, whereas the square of the correlation coefficient ($R^2$) characterising the corresponding model is preferably greater than 0.9.

For example, microporous synthetic carbon of homogenous architecture, which can be carbide-derived microporous carbon, meets these conditions.

It derives from the dependency above that the great specific capacity according to the invention is provided by a carbon material, which has at the same time great specific surface area ($S_{BET}$), great ultramicropore volume ($V_{p<11}$) and good compactability (packing density in compacted electrode, D).

In an environment that is chemically corroding the carbon the carbide-derived carbon powder with high ultramicropore concentration and homogenous pore distribution is developed preferably from carbide crystals of large dimensions. On the other hand, carbon particles obtained by this kind of synthesis are inappropriately large for preparing electrodes with good conductivity and specific capacity. Also, the obstacle in preparing the desired electrodes is the uneven coarse structure of the electrode surface, which can cause mechanical damages in the electrochemical system.

Secondly, it is problematic to bind big particles by adhesion in order to provide the mechanical strength for carbon film and preventing separating of carbon particles during electrochemical cyclisation. The third significant obstacle is the poor packability of big particles, leading to the deterioration in the specific volume and energy density of electrodes.

For solving the described problem the present invention provides a method for preparing carbon electrodes with high packing density, large specific surface area and great ultramicropore concentration, whereas the packing density is preferably achieved by compacting the microporous synthetic carbon particles of different sizes selected in appropriate ratio. Also, it is important to have a good electric contact between compacted particles. A satisfactory result is preferably achieved by the following methods:

1) so-called primary carbon is mixed in an appropriate ratio, which is a carbon powder of high microporosity subjected to the aforementioned specific volume dependency and so-called secondary carbon powder, which has appropriate structure and porosity, while being separately prepared. Primary carbon can be achieved by grinding larger-sized mineral-derived synthetic carbon materials in order to ensure appropriate optimal particle size for the primary carbon with homogenous microstructure, whereas mineral crystalline substance is the starting material of the primary synthetic microporous carbon, selected from carbides, carbonitrides or oxycarbides. Also, the starting material can be the mixture of crystalline substances mentioned above, either the mixture of carbides with carbonitrides or the mixture of carbides with oxycarbides or the mixture of carbonitrides with oxycarbides or the mixture of all mentioned crystalline substances. For example, this carbon can be prepared by halogenation of TiC in fluidized bed reactor and by grinding the resulting carbon particles either in a planetary mill, jet mill, disintegration mill or by other methods. Appropriate structure and porosity of the secondary carbon means that the corresponding carbon microstructure is formed by graphene layers consisting of $sp^2$ hybride carbon atoms with good conductivity that have sufficient room between them for the electrolyte and for forming of the electric double layer. This carbon can be produced for example by halogenation of silicon carbide or halogenation of titanium carbide at temperatures 900°C or above.

2) microporous carbon particles with structural gradient are synthesised according to the method described in the patent document EP1751056 (05747278.9), while grinding according to certain methods of which forms the primary carbon having larger particles and secondary carbon having smaller particles. Microporous carbon particles with structural gradient can be produced for example by co-halogenation of metal carbides and oxidants. This kind of carbon can also be prepared by halogenation of metal carbide or mixture of carbides under the condition of changeable temperature in a manner that at higher temperature secondary carbon with more orderly placement of graphene layers is generated and at lower temperature amorphous primary carbon with disordered structure is generated. Resulting from the above described methods, carbon particles are produced that have surface microstructure differing from their internal microstructure, whereas the structural regularity of carbon particles increases towards the outward direction. By grinding these multistructural particles it is possible to create a composite of primary and secondary carbon, by compacting of which a carbon electrode with high specific volume and energy density is obtained.

BRIEF DESCRIPTION OF DRAWINGS

A method for preparing a carbon composite electrode for the electric double-layer capacitor according to present invention is described in more detail in the following with references to annexed figures where

Fig 1 is a graphic image of the multiple linear regression model according to the invention,

Fig 2 shows schematically the dense packaging of microporous carbon particles in carbon film according to the invention,

Fig 3 shows schematically the cross-section of a carbon composite electrode with one working surface according to the invention,

Fig 4 shows schematically the cross-section of a carbon composite electrode with two working surfaces according to the invention,

Fig 5 shows schematically the package of carbon composite electrodes according to the invention.

BEST MODE FOR CARRYING OUT THE INVENTION

The electrode of the electric double-layer capacitor stores electric energy as a result of the interaction between the electrode surface and the electrolyte ions adsorbed onto the electrode surface by the physical van der Waals forces.

The bigger the number of interactions, the bigger the number of charges stored on the electrode surface and the bigger is the volume of the so-called electric double-layer. On the other hand, the more efficiently the active electrode surface participating in the interactions is packed in the volume of the electrode, the bigger the volumetric capacity or energy density of the corresponding electrode.

The carbon material of appropriate porosity according to the invention can be prepared by so-called matrix methods in which carbon has been chemically precipitated into matrix and by chemical disintegration or melting out of matrix the porous carbon remains. Matrix methods include also a method of preparing carbide-derived carbon, where non-carbon atoms are extracted from carbide crystal by means of chemical reagents (e.g. chlorine, hydrogen chloride, supercritical $H_2O$, etc.), resulting in a carbon skeleton.

Carbide-derived carbon, which is allegedly the best supercapacitor material, varies in its nano- and microstructure from the amorphous disordered carbon skeleton to graphitic or diamond-like highly ordered structures. Thus, only a very limited selection of carbide-derived carbon structural modifications are eligible for the supercapacitor electrode material and that choice is even more limited with regards to preparing supercapacitor electrodes of superior qualities.

Present invention describes a statistical model for selecting carbide-derived carbon materials of appropriate qualities, which enables by simple and operatively measurable physical parameters to select and/or develop carbide-derived carbon materials with excellent energy and electric capacity qualities.

The developed statistical model has even wider scope of application, since it enables to predict within reasonable statistical tolerance also the capacitive qualities of non-carbide-derived micro/mesoporous carbon materials.

According to the invention, following and achieving simultaneously all the parameters of the statistical model enables to prepare supercapacitor electrodes with superior energy density.

Statistical model according to the invention can be described by multiple linear regression equation and it manifests by the function $C_V$ binding the following physical parameters $V_{p<11}$, $S_{BET}$ and D:

$$C_V = a * V_{p<11} + b * S_{BET} + c * D - d$$

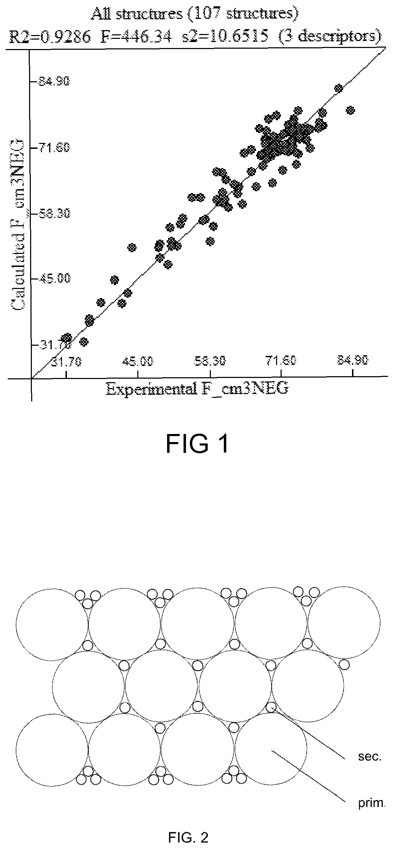

where $C_V$ is the volumetric cathodic electric capacitance [F cm$^{-3}$] of the carbon composite electrode, $V_{p<11}$ is the volume of pores [cm$^3$ g$^{-1}$], sized less than 1.1 nm in the electrode carbon, calculated from the Barrett-Joyner-Halenda (BJH) pore size distribution, $S_{BET}$ is the carbon specific surface area [m$^2$ g$^{-1}$] calculated by the Brunauer-Emmet-Teller (BET) theory and D is the geometric density [g cm$^{-3}$] of compacted carbon (i.e. density of carbon composite electrode). A, b, c and d are coefficients and intercept of the multiple linear regression equation, whereas the square of the correlation coefficient ($R^2$) characterising the corresponding model is greater than 0.9. Multiple linear regression equation according to the invention, with its coefficients and intercept being a = 67.4, b = 0.0245, c = 67.8 and d = 33.0, is illustrated by diagram on Fig. 1.

The authors of current invention claim on the basis of test results that in order to achieve the EDLC volumetric capacitance of 70 F cm$^{-3}$ or beyond, the parameters characterising the carbon composite electrode of high energy density according to the invention, based on the characterised multiple linear regression model need to be simultaneously within the same limits: $S_{BET}$ 1300-1800 m$^2$ g$^{-1}$, $V_{p<11}$ 0.37-0.7 cm$^3$ g$^{-1}$, D 0.65-0.9 g cm$^{-3}$ and each member of the multiple linear regression equation, i.e. $aV_{p<11}$, $bS_{BET}$, or $cD$ cannot be less than 25.

If $V_{p<11}$ is more than 0.7 cm$^3$ g$^{-1}$, then the carbon matrix is apparently too dense, with insufficient transportation porosity for the electrolyte charge carriers and the carbon material specific capacitance is small.

If $V_{p<11}$ is less than 0.37 cm$^3$ g$^{-1}$, then the carbon surface usage is inefficient for the adsorption of electrolyte ions and the volumetric capacitance of corresponding carbon composite electrode will be less than 70 F cm$^{-3}$.

If the electrode carbon specific surface area $S_{BET}$ is over 1800 m$^2$ g$^{-1}$, then the carbon matrix is sparse and the volumetric capacitance of corresponding carbon composite electrode will be less than 70 F cm$^{-3}$.

If specific surface area is less than 1300 m$^2$ g$^{-1}$, then the specific capacitance [F g$^{-1}$] of carbon material is small, as the carbon lacks surface for the adsorption of electrolyte ions.

If the density of carbon composite electrode is more than 0.9 g cm$^{-3}$, then the carbon matrix is too dense, with insufficient transportation porosity for the electrolyte charge carriers and the electrode specific capacitance [F g$^{-1}$] is small.

If the density of carbon composite electrode is less than 0.65 g cm$^{-3}$, then the quantity of carbon in the electrode is small and the volumetric capacitance of the electrode will be less than 70 F cm$^{-3}$.

It is known to those skilled in the art that the values of parameters describing the statistical model depend on the methods, conditions and quality of measurement. The accuracy and prediction capability of the statistical model depend on the homogeneity, uniformity of the set of experimental parameters.

Numerous examples of methods for preparing carbide-derived carbon materials can be found in scientific as well as in patent literature. An overview of various methods is provided by [Yushin G, Nikitin A, Gogotsi Y. Carbide derived carbon. In: Gogotsi Y, editor. Nanomaterials Handbook, vol. 3. Boca Raton: CRC Press; 2006. p. 239-82].

The porosity parameters have been followed from in forming the statistical model according to the invention, measured with the Gemini specific surface area analyzer (Micromeritics). Measurements were carried out at the boiling temperature of nitrogen (-196°C). $S_{BET}$ was calculated according to BET theory from the nitrogen adsorption isotherm, employing the multipoint method within the relative pressure range up to $P/P_0 < 0.2$. Volume fractions of the pores for discrete pore size ranges (e.g. $V_{p<11}$) were calculated from the BJH pore distribution model.

Carbon materials were heated prior to porosity measurement in an argon-ventilated atmosphere for 1 hour at temperature 300°C.

The density of compacted carbon (D) is the carbon composite electrode density that has been calculated on the basis of the partial sample and geometric volume of the previously vacuumed carbon composite electrode.

Carbon composite electrode has been prepared as follows: 92 mass fractions of porous carbon were impregnated with ethanol to a paste-like condition, cooled to ~4°C. Then, 8 mass fractions of polymeric binders were added (PTFE, Aldrich, 60 % dispersion in water). After careful dispersion the received mixture was treated for creating binding agent fibres and then dried at 90°C for ~1 hour at atmospheric pressure. Then, petroleum ether was added for increasing plasticity, mixture was pressed into a 2-3 mm thick sheet and formed by roller dies gradually into a ~100 $\mu$m thick carbon film. Carbon films were dried at 150°C in vacuum and covered from one side by a 2 mm thick layer of aluminium for providing the electrode with good electric contact. Covering was carried out by plasma-activated physical deposition method.

Examples of parameters of carbon materials prepared according to the method of present invention and volumetric capacitances predicted by the statistical model and actually measured are listed in Table 1.

Table 1. Examples of carbide-derived carbon electrodes according to the invention.

| Material | $S_{BET}$ | $V_{p<11}$ | D | $C_{model}$ | $C_{exp}$ |
|---|---|---|---|---|---|
| | $m^2\,g^{-1}$ | $cm^3\,g^{-1}$ | $g\,cm^{-3}$ | $F\,cm^{-3}$ | $F\,cm^{-3}$ |
| 1 | 1658 | 0.44 | 0.68 | 83.0 | 82.8 |
| 2 | 1543 | 0.40 | 0.65 | 75.3 | 75.1 |
| 3 | 1594 | 0.31 | 0.62 | 68.9 | 69.1 |
| 4 | 1494 | 0.32 | 0.61 | 66.4 | 66.4 |
| 5 | 1403 | 0.32 | 0.56 | 60.3 | 60.4 |
| 6 | 2152 | 0.05 | 0.42 | 51.4 | 51.5 |
| 7 | 1059 | 0.04 | 0.60 | 36.2 | 36.2 |

The following describes increasing the density required for the electrode according to the invention by combining carbide-derived carbon particles of various sizes, which Fig 2 displays for illustrative purpose. Carbide-derived carbon particles, which are in majority according to the partial sample, will be henceforth referred to as primary and minority particles will be called secondary particles, while the proportion of primary and secondary particles (Prim/Sec) is important. Table 2 lists the carbon materials and their average particle sizes, used as primary or secondary components in exemplifying the nature of the invention.

Table 2. Carbon materials (A-C) used for describing current invention.

| # | Starting carbide | Average diameter of particles |
|---|---|---|
| A | SiC | 0.1 $\mu$m |
| B | TiC (H.C. Starck) | 3 $\mu$m |
| C | TiC (PPM) | 50 $\mu$m |

The following example, which is illustrated by data listed in Table 3, describes the dependency between the primary and secondary carbon component mass relationship and corresponding carbon electrode density and specific capacitance, which is in good conformity with the multiple linear statistical model described above and data listed in Table 1.

Table 3. Carbidic secondary carbon A and primary carbon B composites and specific capacitances of supercapacitors with corresponding electrodes.

| Electrode No. (SC) | Carbon A and B mass % | Carbon-electrode density [g cm⁻³] | Specific capacitance | |
|---|---|---|---|---|
| | | | [F cm⁻³] | [F g⁻¹] |
| 1 (1487) | 0 / 100 | 0.73 | 84 | 114 |
| 2 (1486) | 5/95 | 0.73 | 85 | 116 |
| 3 (1489) | 10/90 | 0.76 | 86 | 114 |
| 4 (1490) | 15/85 | 0.78 | 90 | 115 |
| 5 (1485) | 20 / 80 | 0.78 | 89 | 114 |

The examples in table 3 show that the change in the relative quantities of primary carbon and secondary carbon within the range of 80-100% primary carbon does not affect significantly the gravimetric capacitance of the electrode, however, the effect on the electrode density and thereby on the volumetric capacitance is apparent. The best result or the greatest volumetric capacitance is provided by 15% secondary carbon additive in carbon composite electrode.

The following example describes the effect of primary carbon particle size on the specific capacitance of carbon composite electrode. The composition of composite electrodes was varied by changing the relative quantities of components A, B and C defined in table 1. The data from table 4 shows that carbon synthesised from larger carbide particles provides the electrode with greater density. However, it is clear from given examples that specific capacitances of electrodes No.6-8 of larger primary carbon particles (here ~50 μm) are significantly lower than in the electrode No.5 with 1-5 μm primary carbon particles, which arises from the poor electric contact between large particles. It is clear from given examples that in order to achieve high energy density in the carbon composite electrode according to the invention the size of preferred primary component particles is limited and 1-5 μm carbon particles are preferred rather than 50 μm carbon particles. Also, it appears that irrespective of the size of primary component particles submicrometer-sized carbon particles are preferred as a secondary component.

Table 4. Density and specific capacitance of an electrode achieved by varying the relative quantities of carbide carbons A, B and C.

| Electrode No. (SC) | Carbon A / B / C mass % | Carbon-electrode density [g cm⁻³] | Specific capacitance | |
|---|---|---|---|---|
| | | | [F cm⁻³] | [F g⁻¹] |
| 6 (1482) | 0/20/80 | 0.82 | 79 | 96 |
| 7 (1483) | 5 / 15 /80 | 0.83 | 81 | 97 |
| 8 (1484) | 20 / 0 / 80 | 0.84 | 82 | 97 |
| 5 (1485) | 20 / 80 / 0 | 0.78 | 89 | 114 |

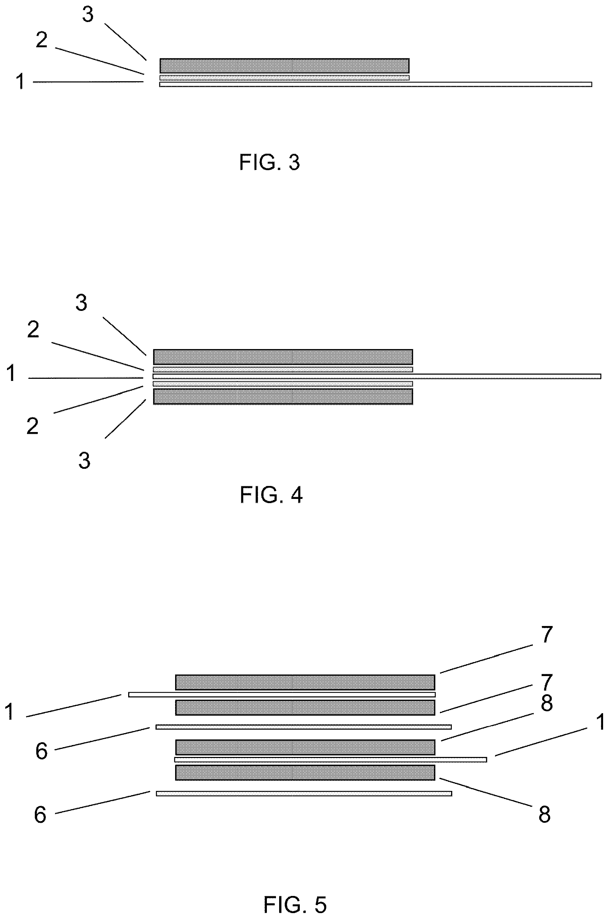

The binding options for the carbon composite electrode current collector are the following: one-sided and two-sided as shown on figure 3 and figure 4 where the current collector 1 has been bound with carbon composite electrode 3 by an interim layer 2, conducting electricity and having adhesive qualities. Alternative method for binding the current collector and carbon composite electrode can be pressure contact. Upon employing electrodes by pressure contact carbon composite electrode can be covered with a thin layer of metal beforehand, using vacuum evaporation method or plasma-activated vacuum evaporation method PVD (physical vapour deposition) or metal gun-spray method. The thin layer of metal can be of aluminium, titanium, nickel, gold, etc.

Possible current collector materials are for example soft Al-foil with untreated surface; so-called cathodic chemically treated rigid Al-foil (e.g. Skultuna, 14μm; Al-Capacitor cathode foil C209, KDK Corp., Japan, 20μm; Al-Capacitor cathode foil KAPPA 204, Becromal, 20μm; Al-Capacitor cathode foil KAPPA 304, Becromal, 30μm; etc.). The surface of foil used as a current collector can be roughened from one or both sides either by mechanical or chemical methods in order to enhance the electric contact between the current collector and carbon composite electrode. The layer of glue on current collector can be an electrically conductive adhesive polymer with termoplastic properties, whereby conductivity is provided to the layer of glue by the conducting carbon nanopowder dispersed into polymer: lampblack, colloidal graphite, nanographite, acetylene black, carbon-black, disintegrated carbon nanotubes, etc. Glue layer can include graphite micro particles, conducting mineral micro particles, e.g. titanium carbide, etc. in order to reduce the transition impedance between the glue layer and current collector.

Carbon composite electrodes bound with current collector can be used to form an electric double-layer capacitor, like the one shown on Fig. 5, where the positively charged carbon composite electrode 7, bound two-sided to the current collector 1 through an adhesive interim layer 2 has been aligned with a negatively charged carbon composite electrode 8 of similar structure, whereby negatively and positively charged composite electrodes are separated from each other by a porous interim layer or separator 6 having ionic conductivity.

Electric double-layer capacitor is hermetically packed into an electrochemically insoluble plastic or metal housing from which the current is steered out by current terminals.

Possible connection methods for current collectors and terminals: spot welding; TIG-welding; laser welding; diffusion welding; Al sputtering or other methods.

Double-layer capacitor is saturated with an aprotonic anhydrous electrolyte, which can consist of an organic solvent and aprotonic salt that provides ion pairs. Electrolyte salts can be quaternary ammonium salts and quaternary phosphonium salts, e.g. tetraethylammonium tetrafluoroborate; triethylmethylammonium tetrafluoroborate, etc.

Electrolyte salt cation can be $(R_1R_2)_4N^+$ or $R_1R_2P^+$, in which $R_1$ and $R_2$ are alkyl groups $-CH_3$ to $-C_5H_{11}$ or cyclic phenyl radical $-C_6H_5$ and anion can be $BF_4^-$; $PF_6^-$; $AsF_6^-Ph_4B^-CF_3SO_3^-$, etc.

The following solvents and their combinations can be used as electrolyte solvents: acetonitrile, benzonitrile, sulpholane, propylene carbonate, ethylene carbonate, ethyl methyl carbonate, dimethyl carbonate, diethyl carbonate, methyl acetate, γ-butyrolactone, tetrahydrofurane, N,N-dimethylformamide, dimethylsulphoxide, pyridine, sulpholane, dimethylketone, etc.

Also, ionic liquids of imidazole group can be used as electrolytes, e.g. $EMIBF_6$, $EMICF_3SO_3$, etc. either as concentrates or with solvents.

Components and structural options of the supercapacitor described above are provided as examples that are in no way an exhaustive listing of carbon composite electrode implementation possibilities in supercapacitor of high energy density.

## Claims

1. A method for preparing a carbon composite electrode (3), for an electric double-layer capacitor having volumetric capacitance of 70 F $cm^{-3}$ or beyond, with an active layer that comprises a) primary synthetic carbon with irregular, non-graphitic structure, b) secondary synthetic carbon, made up of graphene layers and c) polymeric binding agent, **characterised by** determining the carbon composite electrode's specific capacitance $C_V$ in terms of $F/cm^3$ by the multiple linear regression equation:

$$C_V = a * V_{p<11} + b * S_{BET} + c * D - d,$$

   in which

   $V_{p<11}$ in terms of $cm^3$ $g^{-1}$ is the volume of pores with size less than 1.1 nm calculated from the Barrett-Joyner-Halenda (BJH) pore size distribution,
   $S_{BET}$ in terms of $m^2$ $g^{-1}$ is the electrode carbon specific surface area calculated by Brunauer-Emmet-Teller (BET) theory,
   D in terms of g $cm^{-3}$ is the geometric density of compacted carbon of the carbon composite electrode (3), and coefficient values are a = 67.4, b = 0.0224, c = 67.8 and intercept value is d = 33.0,
   whereby none of the carbon composite electrode's multiple linear regression equation members: $a*V_{p<11}$, $b*S_{BET}$ and $c*D$ has a value less than 25.

2. The method according to claim 1, in which the volume $V_{p<11}$ of pores smaller than 1.1 nm in the carbon composite electrode (3) active layer is within a range of 0.37-0.7 $cm^3g^{-1}$, the electrode carbon specific surface area $S_{BET}$ is within a range of 1300-1800 $m^2g^{-1}$ and the geometric density D of compacted carbon of the carbon composite electrode (3) is within a range of 0.65-0.9 g $cm^{-3}$.

3. The method according to claim 1, wherein the average size of particles of the secondary synthetic carbon, formed by graphene layers is 5 to 20 times smaller than the average size of particles of the primary carbon with irregular, non-graphitic structure.

4. The method according to claim 1, wherein the secondary and primary carbon mass relationship in the electrode remains within 1/20 to 1/5, whereas being preferably within 1/10 to 1/6.

**5.** The method according to any of the claims 1 to 4, wherein the starting material of the primary synthetic carbon being microporous carbon with irregular, non-graphitic structure inside the composition of the carbon composite electrode (3) is mineral crystalline substance, which is selected from carbides, carbonitrides, oxycarbides or their combinations.

**6.** The method according to claim 4, wherein the primary synthetic microporous carbon with irregular, non-graphitic structure inside the composition of the carbon composite electrode (3) is a carbide-derived carbon, which is obtained by grinding at least 6 times bigger carbon particles.

**7.** The method according to claim 1, wherein the secondary synthetic carbon being microporous carbon inside the electrode composition, formed by graphene layers is carbide-derived carbon.

**8.** The method according to claim 6, wherein the secondary synthetic microporous carbon inside the electrode composition, formed by graphene layers is synthesised *in situ* with primary synthetic microporous carbon of irregular, non-graphitic structure.

**9.** The method according to claim 1, wherein the active layer of the electrode (3) is compacted in advance and then laminated to a current collector (1).

**10.** The method according to claim 9, wherein a layer being contacted with the active layer of the current collector (1) is treated in advance with conducting carbon nanopowder.

**11.** The method according to claim 9, in wherein the lamination is performed by a conducting adhesive layer (2) applied to the current collector (1) before lamination.

**12.** The method according to claim 11, wherein the conducting adhesive layer (2) is formed by the mixture of conducting carbon nanopowder and electrochemically inactive organic polymer, in which the thickness of the adhesive layer is within 0.5 to 3 micrometers, preferably within 1 to 2 micrometers.

**13.** The method according to claim 8, wherein one side of the electrode (3) is covered with a 1 to 4 micrometers thick layer of conducting material, so that the layer of the conducting material is partly diffused into the active layer of the carbon composite electrode (3).

**14.** The method according to claim 13, wherein the layer of conducting material is a layer of aluminium and which covers one side of the electrode (3) 1 to 4 micrometers thick.

**15.** The method according to any of the claims 10 to 12, wherein the surface of the current collector (1) is chemically or mechanically roughened before its contact with the carbon composite electrode (3).

**Patentansprüche**

**1.** Verfahren zur Vorbereitung einer Kohlenstoff-Verbundstoffelektrode (3) für einen elektrischen, doppelschichtigen Kondensator mit einer Volumenkapazität von 70 F/cm$^{-3}$ oder mehr mit einer aktiven Schicht, die aus a) primär synthetischem Kohlenstoff mit unregelmäßiger, nicht graphithaltiger Struktur, b) sekundär synthetischem Kohlenstoff aus Graphene-Schichten und c) polymerischem Bindemittel besteht, **gekennzeichnet durch** die Bestimmung der spezifischen Kapazität Cv der Kohlenstoff-Verbundstoffelektrode bezüglich F/cm$^{-3}$ durch folgende lineare Mehrfachregression:

$$C_V = a * V_{p<11} + b * S_{BET} + c * D - d,$$

bei der

$V_{p<11}$ bezüglich cm$^3$/g$^{-1}$ das Volumen der Poren mit einer Größe von weniger als 1,1 nm ist, das aus der Porengrößenverteilung nach Barrett-Joyner-Halenda (BJH) berechnet wird,
$S_{BET}$ bezüglich m$^2$/g$^{-1}$ der spezifische Oberflächenbereich des Kohlenstoffs der Elektrode ist, der nach der Brunauer-Emmet-Teller (BET) Theorie berechnet wird,
D bezüglich g/cm$^{-3}$ die geometerische Dichte des verdichteten Kohlenstoffs der Kohlenstoff-Verbundstoffelektrode (3) ist und

die Koeffizientenwerte a = 67,4, b = 0,0224, c = 67,8 und der Abschnittswert d = 33,0 beträgt, wobei keines der Elemente der linearen Mehrfachregression der Kohlenstoff-Verbundstoffelektrode a*$V_{p<11}$, b*$S_{BET}$ und c*D einen Wert von weniger als 25 aufweist.

2.  Verfahren gemäß Anspruch 1, bei dem das Volumen $V_{p<11}$ der Poren, die geringer als 1,1 nm sind, in der aktiven Schicht der Kohlenstoff-Verbundstoffelektrode (3) innerhalb eines Bereichs von 0,37-0,7 cm$^3$/g$^{-1}$, der spezifische Oberflächenbereich $S_{BET}$ des Kohlenstoffs der Elektrode zwischen 1.300-1.800 m$^2$g$^{-1}$ und die geometrische Dichte D des verdichteten Kohlenstoffs der Kohlenstoff-Verbundstoffelektrode (3) innerhalb eines Bereichs von 0,65-0,9 g/cm$^{-3}$ liegt.

3.  Verfahren gemäß Anspruch 1, bei dem die durchschnittliche Partikelgröße des sekundär synthetischen Kohlenstoffs, der durch die Graphene-Schichten gebildet wird, zwischen 5- bis 20-mal geringer als die durchschnittliche Partikelgröße des primären Kohlenstoffs mit unregelmäßiger, nicht graphithaltiger Struktur ist.

4.  Verfahren gemäß Anspruch 1, bei dem das Verhältnis von sekundärer und primärer Kohlenstoffmasse in der Elektrode innerhalb 1/20 bis 1/5 bleibt, wobei es vorzugsweise zwischen 1/10 bis 1/6 liegt.

5.  Verfahren gemäß Ansprüche 1 bis 4, bei dem das Anfangsmaterial des primär synthetischen Kohlenstoffs mikroporöser Kohlenstoff mit unregelmäßiger, nicht graphithaltiger Struktur innerhalb des Verbundstoffes der Kohlenstoff-Verbundstoffelektrode (3) eine mineralische, kristalline Substanz ist, die aus Karbiden, Karbonitriten, Oxykarbiden oder deren Kombinationen ausgewählt wird.

6.  Verfahren gemäß Anspruch 4, bei dem der primär synthetische, mikroporöse Kohlenstoff mit unregelmäßiger, nicht graphithaltiger Struktur innerhalb der Zusammensetzung der Kohlenstoff-Verbundstoffelektrode (3) ein aus Karbid abgeleiteter Kohlenstoff ist, der aus einem Schleifprozess mit mindestens 6-mal größeren Kohlenstoffpartikeln erhalten wird.

7.  Verfahren gemäß Anspruch 1, bei dem der sekundär synthetische Kohlenstoff mikroporöser Kohlenstoff innerhalb der Elektrodenzusammensetzung ist, der aus Graphene-Schichten gebildet wird, und aus Karbid abgeleitetem Kohlenstoff besteht.

8.  Verfahren gemäß Anspruch 6, bei dem der sekundär synthetische, mikroporöse Kohlenstoff innerhalb der Elektrodenzusammensetzung, der aus Graphene-Schichten gebildet wird, *in situ* mit primär synthetischem, mikroporösem Kohlenstoff mit unregelmäßiger, nicht graphithaltiger Struktur synthetisiert wird.

9.  Verfahren gemäß Anspruch 1, bei dem die aktive Schicht der Elektrode (3) vorher verdichtet und dann auf einen Stromabnehmer (1) laminiert wird.

10. Verfahren gemäß Anspruch 9, bei dem eine Schicht mit der aktiven Schicht des Stromabnehmers (1) verbunden und vorher mit kohlenstoffleitendem Nanopulver behandelt wird.

11. Verfahren gemäß Anspruch 9, bei dem die Laminierung durch eine leitende Klebstoffschicht (2) erreicht wird, die auf den Stromabnehmer (1) vor der Laminierung aufgetragen wird.

12. Verfahren gemäß Anspruch 11, bei dem die leitende Klebstoffschicht (2) durch die Mischung von leitendem Kohlenstoff-Nanopulver und elektrochemisch inaktivem organischem Polymer gebildet wird, bei der die Dicke der Klebstoffschicht innerhalb von 0,5 bis 3 Mikrometer, vorzugsweise aber innerhalb von 1 bis 2 Mikrometern, liegt.

13. Verfahren gemäß Anspruch 8, bei dem eine Seite der Elektrode (3) mit einer 1 bis 4 Mikrometer dicken Schicht aus leitendem Material bedeckt ist, so dass die Schicht des leitenden Materials teilweise mit der aktiven Schicht der Kohlenstoff-Verbundstoffelektrode (3) verbunden ist.

14. Verfahren gemäß Anspruch 13, bei dem die Schicht des leitenden Materials eine Schicht aus Aluminium ist und die eine Seite der Elektrode (3) 1 bis 4 Mikrometer dick bedeckt.

15. Verfahren gemäß Ansprüche 10 bis 12, bei dem die Oberfläche des Stromabnehmers (1) vor dessen Kontakt mit der Kohlenstoff-Verbundstoffelektrode (3) chemisch oder mechanisch aufgeraut wird.

**Revendications**

1. Procédé de préparation d'une électrode composite en carbone (3), pour un condensateur électrique à double couche ayant une capacité volumétrique de 70 F cm$^{-3}$ ou plus, avec une couche active qui comprend a) du carbone synthétique primaire ayant une structure irrégulière non graphitique, b) du carbone synthétique secondaire, constitué de couches de graphène et c) un liant polymère, **caractérisé par** la détermination de la capacité spécifique cv de l'électrode composite en carbone en termes de F/cm$^{-3}$ par l'équation de régression linéaire multiple :

$$C_V = a * V_{p<11} + b * S_{BET} + c * D - d$$

dans laquelle

$V_{p<11}$ en cm$^3$ g$^{-1}$ est le volume des pores d'une taille inférieure à 1,1 nm calculé à partir de la distribution de la taille des pores de Barrett-Joyner-Halenda (BJH),

$S_{BET}$ en termes de m$^2$ g$^{-1}$ est la surface spécifique en carbone de l'électrode calculée par la théorie de Brunauer-Emmet-Teller (BET),

D en termes de g cm$^{-3}$ est la densité géométrique du carbone compacté de l'électrode composite de carbone (3), et

les valeurs de coefficient sont a = 67,4, b = 0,0224, c = 67,8 et la valeur d'interception est d = 33,0, où aucun des multiples éléments d'équation de régression linéaire de l'électrode composite de carbone : a*$V_{p<11}$, b*$S_{BET}$ et c*D a une valeur inférieure à 25.

2. Procédé selon la revendication 1, dans lequel le volume $V_{p<11}$ de pores inférieurs à 1,1 nm dans la couche active d'électrode composite en carbone (3) se situe dans une plage de 0,37 à 0,7 cm$^3$g$^{-1}$, la surface spécifique en carbone de l'électrode $S_{BET}$ se situe dans une plage de 1300 à 1800 m$^2$g$^{-1}$ et la densité géométrique D du carbone compacté de l'électrode composite en carbone (3) se situe dans une plage de 0,65 à 0,9 g cm$^{-3}$.

3. Procédé selon la revendication 1, dans lequel la taille moyenne des particules du carbone synthétique secondaire, formé par les couches de graphène, est 5 à 20 fois plus petite que la taille moyenne des particules du carbone primaire ayant une structure irrégulière non graphitique.

4. Procédé selon la revendication 1, dans lequel la relation de masse de carbone secondaire et primaire dans l'électrode reste entre 1/20 et 1/5, tout en étant de préférence entre 1/10 et 1/6.

5. Procédé selon l'une quelconque des revendications 1 à 4, dans lequel le matériau de départ du carbone synthétique primaire est du carbone microporeux avec une structure irrégulière non graphitique à l'intérieur de la composition de l'électrode composite de carbone (3) est une substance cristalline minérale, qui est choisie parmi les carbures, les carbonitrures, les oxycarbures ou leurs combinaisons.

6. Procédé selon la revendication 4, dans lequel le carbone microporeux synthétique primaire avec une structure irrégulière non graphitique à l'intérieur de la composition de l'électrode composite de carbone (3) est un carbone dérivé de carbure, qui est obtenu par broyage d'au moins 6 fois des particules de carbone plus grosses.

7. Procédé selon la revendication 1, dans lequel le carbone synthétique secondaire étant du carbone microporeux à l'intérieur de la composition d'électrode, formé par des couches de graphène, est du carbone dérivé du carbure.

8. Procédé selon la revendication 6, dans lequel le carbone microporeux synthétique secondaire à l'intérieur de la composition d'électrode, formé par des couches de graphène, est synthétisé *in situ* avec du carbone microporeux synthétique primaire de structure irrégulière, non graphitique.

9. Procédé selon la revendication 1, dans lequel la couche active de l'électrode (3) est compactée à l'avance, puis stratifiée sur un collecteur de courant (1).

10. Procédé selon la revendication 9, dans lequel une couche en contact avec la couche active du collecteur de courant (1) est traitée à l'avance avec de la nanopoudre de carbone conductrice.

11. Procédé selon la revendication 9, dans lequel la stratification est effectuée par une couche adhésive conductrice (2) appliquée au collecteur de courant (1) avant la stratification.

12. Procédé selon la revendication 11, dans lequel la couche adhésive conductrice (2) est formée par le mélange de nanopoudre de carbone conductrice et de polymère organique électrochimiquement inactif, dans lequel l'épaisseur de la couche adhésive est comprise entre 0,5 et 3 micromètres, de préférence entre 1 et 2 micromètres.

13. Procédé selon la revendication 8, dans lequel un côté de l'électrode (3) est recouvert d'une couche de 1 à 4 micromètres d'épaisseur de matériau conducteur, de sorte que la couche de matériau conducteur est partiellement diffusée dans la couche active de l'électrode composite en carbone (3).

14. Procédé selon la revendication 13, dans lequel la couche de matériau conducteur est une couche d'aluminium et qui recouvre un côté de l'électrode (3) d'une épaisseur de 1 à 4 micromètres.

15. Procédé selon l'une quelconque des revendications 10 à 12, dans lequel la surface du collecteur de courant (1) est rendue rugueuse chimiquement ou mécaniquement avant son contact avec l'électrode composite en carbone (3).

All structures (107 structures)
R2=0.9286  F=446.34  s2=10.6515  (3 descriptors)

FIG 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6602742 B
- US 6697249 B
- EP 1786008 A
- WO 2008058231 A2
- EP 1751056 A
- EP 05747278

**Non-patent literature cited in the description**

- Carbide derived carbon. **YUSHIN G ; NIKITIN A ; GOGOTSI Y.** Nanomaterials Handbook. CRC Press, 2006, vol. 3, 239-82